(19) Europäisches Patentamt

European Patent Office

Office européen des brevets

(11) Veröffentlichungsnummer: **0 211 415 B1**

(12) **EUROPÄISCHE PATENTSCHRIFT**

(45) Veröffentlichungstag der Patentschrift: **02.12.92**

— (21) Anmeldenummer: **86110645.8**

(22) Anmeldetag: **01.08.86**

(51) Int. Cl.⁵: **H04N 5/782**

(54) **Videorecorder.**

(30) Priorität: **08.08.85 DE 3528453**

(43) Veröffentlichungstag der Anmeldung:
**25.02.87 Patentblatt 87/09**

(45) Bekanntmachung des Hinweises auf die
Patenterteilung:
**02.12.92 Patentblatt 92/49**

(84) Benannte Vertragsstaaten:
**AT BE CH DE FR GB IT LI LU NL SE**

(56) Entgegenhaltungen:
**DE-A- 2 211 704**
**DE-B- 2 339 406**
**FR-A- 2 406 826**

(73) Patentinhaber: **Deutsche Thomson-Brandt
GmbH
Hermann-Schwer-Strasse 3 Postfach 1307
W-7730 Villingen-Schwenningen(DE)**

(72) Erfinder: **Kaaden, Jürgen, Dipl.-Ing.
Im Tannhörnle 10
W-7730 VS-Villingen(DE)**
Erfinder: **Link, Herrmann, Dipl.-Ing.
Augenmoosstrasse 10
W-7730 VS-Obereschach(DE)**

(74) Vertreter: **Einsel, Robert, Dipl.-Ing.
Deutsche Thomson-Brandt GmbH Patent-
und Lizenzabteilung Göttinger Chaussee 76
W-3000 Hannover 91(DE)**

EP 0 211 415 B1

## Beschreibung

Bei handelsüblichen Videorecordern nach dem Schrägspurverfahren ist es bekannt, für Kopftrommel- und Magnetbandantrieb automatische Motorsteuerungen einzusetzen, die für eine Zusammenwirken beider Antriebe optimale Bezugslagebedingungen von Videoköpfen und Magnetband herstellen.

Diese Präzisionssteuerungen, auch Servosteuerungen genannt, werden von Referenzsignalen bestimmt, die als gemeinsame Quelle für die Verknüpfung der verschiedenen Regelanordnungen dienen.

In der VHS-Norm ist z.B. festgelegt, daß das Magnetband eine Kopftrommel mit zwei Magnetköpfen mit etwas mehr als 180° umschlingt. Von jedem im Eingriff mit dem Magnetband stehenden Magnetkopf wird in einer Spur ein Halbbild in dem Umschlingungsbereich von 180° aufgezeichnet. In einem über 180° hinausgehenden Bereich von etwa 3° werden weitere Zeilen geschrieben, so daß sich eine Überlappungszone zweier nebeneinander liegender Spuren bei der Aufnahme von etwa sechs Zeilen ergibt. Die Lage dieser Überlappungszone ist in ihrer mittleren Zuordnung auf 6,5 ± 1,5 Zeilen vor Eintreffen eines Vertikal-Synchronimpulses festgelegt. Sie ist auch die sogenannte Schaltposition für die Umschaltung der Magnetköpfe bei Wiedergabe. Für das Ein- bzw. Ausschalten der Magnetköpfe bei dieser Schaltposition sind z.B. am Umfang der Kopftrommel in einer festgelegten Zuordnung ein oder mehrere kleine Magnete angebracht, die in einer oder mehreren feststehenden Spulen am Anfang jeder Magnetspur Impulse generieren, aus denen die Kopfumschaltung abgeleitet wird. Da sowohl die Anordnung der Magnete als auch die Lage der Generator spulen toleranzbehaftet sind, ist eine mechanische Verstellung z.B. der Spulen erforderlich, um die geforderter Zuordnung des Kopfumschaltimpulses zum Vertikalimpuls zu realisieren. Es sind auch optische Generatoren für die Erzeugung von Kopfumschaltimpulsen bekannt, die ebenso wie die elektromechanischen Generatoren justiert werden müssen. Es ist möglich, eine mechanische Justierung durch einstellbare elektrische Schaltungen zu ersetzen, z.B. durch Veränderung der Ablaufzeit von monostabilen Kippstufen.

Die Einstellung für den Kopfumschaltimpulsgenerator in der Fabrik oder im Servicefall erfordert wegen der hohen erforderlichen Genauigkeit einen großen Meßgeräteaufwand und setzt qualifiziertes Bedienungspersonal voraus. Außerdem sind erfahrungsgemäß derartige mechanisch-elektrische Einstellungen mit einer gewissen Einstellunsicherheit behaftet.

Der Erfindung liegt die Aufgabe zugrunde, den Einstellvorgang so zu vereinfachen, daß mit geringem Aufwand eine optimale Einstellung erreicht werden kann.

Diese Aufgabe wird durch die im Anspruch 1 beschriebene Erfindung gelöst. Vorteilhafte Weiterbildungen sind in den abhängigen Ansprüchen beschrieben.

Aus der DE-A-2 211 704 ist eine Bandantriebsvorrichtung bekannt, bei der mittels abgespeicherter Korrektursignale, die verschiedenen Winkelstellungen der Bandantriebswelle zugeordnet und synchron mit der Umdrehung derselben abtastbar sind, Unterschiede zwischen dem Istwert der Bandgeschwindigkeit und dem Istwert der Bandantriebsdrehzahl kompensiert werden, indem die Korrektursignale den Regelabweichungssignalen hinzugefügt werden. Die Gewinnung der Korrektursignale (in einem Einstellvorgang bei Aufnahme und Wiedergabe eines frequenzkonstanten Signals) und deren Zuordnung erfolgen mittels eines mit der Bandantriebswelle gekoppelten Impulsgebers. Durch dieses dort offenbarte Verfahren läßt sich bei einem Videorecorder lediglich der Gleichlauf zwischen Aufnahme- und Wiedergabegeschwindigkeit verbessern.

Aus der DE-B2-2 339 406 ist ein Aufzeichnungs- und Wiedergabegerät für Videosignale bekannt, bei dem eine Neuaufzeichnung sich störungsfrei an eine bestehende Aufnahme anschließen läßt. Hierzu wird zunächst da Servosystem für den Bandantrieb auf die Neuaufzeichnung vorbereitet, indem dieses mit den Bildsynchronimpulsen der Neuaufzeichnung synchronisiert wird, wobei von diesen Bildsynchronimpulsen und von den mit dem ortsfesten Kontrollkopf abgetasteten Synchronimpulsen der bestehenden Aufnahme Signale abgeleitet und abgespeichert werden. Diese Signale, die bei der Neuaufzeichnung einem ersten Steuereingang des Bandantriebs-Servosystems zugeführt werden, dienen dabei als Soll-Signal, während die mit einem Tachogenerator des Bandantriebes erzeugten Tachosignale, die einem zweiten Steuereingang des Bandantriebs-Servosystems zugeführt werden, das Ist-Signal bilden. Eine Erzeugung und Abspeicherung eines Korrektorsignals für eine Zeitkorrektur der Kopfumschaltimpulse aufgrund einer Fehleinstellung des Kopfumschaltimpulsgebers ist dort jedoch ebenfalls nicht vorgesehen.

Im Prinzip besteht die Erfindung darin, einen sich durch die Montage des Impulsgebers ergebenden mechanischen Ist-Stand nicht mehr zu verändern. Dadurch werden Signale abgegeben, deren zeitlicher Ablauf sich nicht mit den von der jeweiligen Systemnorm vorgegebenen Zeiten deckt. In einer Servicestellung, durch Schalter oder Brücken während eines Einstellvorganges realisiert, wird der jeweilige zeitliche Fehler der Impulslage mit Hilfe eines sich schrittweise oder kontinuierlich ändernden Korrektursignales, welches dem vom Impulsgeber erzeugten Signal hinzugefügt wird, korrigiert. Dieses Korrektursignal wird z. B. in einem Rampengenerator erzeugt und in Verbindung mit den vom Impulsgeber abgegebenen Signalen bei Erreichen eines der Norm entsprechenden Sollwertes in einem nicht flüchtigen Speicher abgespeichert. Nach Aufhebung der Servicestellung wird das jeweilige gespeicherte Korrektursignal den nicht eingestellten Signalen als Korrekturwert hinzugefügt.

Voraussetzung für einen derartigen Abgleichvorgang ist eine Einstellung, die sich schon bei der Montage des Gerätes ohne besonderen Einstellvorgang automatisch durch Vorgabe einer festgelegten Anschraubposition für den Kopfumschaltimpulsgeber ergibt. Es müssen nämlich die vom Impulsgeber generierten Kopfumschaltimpulse zeitlich früher als 6,5 Zeilen vor Eintreffen der Vertikalimpulse aus dem Videosignal erzeugt werden, um eine Korrektur durch Verzögern der abgegebenen Impulse zu erreichen.

Indikator für eine Einstellung kann z.B. ein Oszillographenbild sein, auf dem die vom Bezugsband kommenden Vertikalimpulse mit den Kopfumschaltimpulsen gezeigt werden.

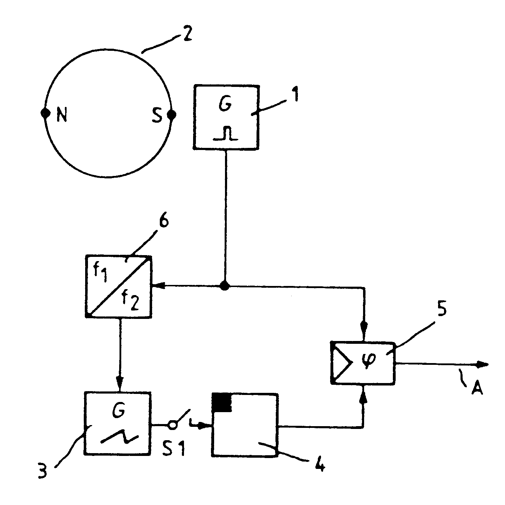

Anhand der Figur soll die Erfindung beispielhaft näher erläutert werden.

Sie zeigt in einem Blockschaltbild eine elektrische Korrekturmöglichkeit eines fehleingestellten Impulsgebers in einem Servicefall.

Die Serviceeinstellung erfolgt bei Wiedergabe eines Bezugsbandes, welches exakt nach Norm aufgenommen worden ist. Für die Einstellung ist eine Verbindung erforderlich, die durch den Schalter S1 hergestellt wird.

Im Impulsgeber 1 werden durch die Rotation einer Kopftrommel 2 Impulse erzeugt, die einerseits für die Synchronisation der Servosteuerungen und andererseits für die Umschaltung der in der Kopftrommel angeordneten Magnetköpfe als Referenz dienen. Es ist z.B. nach der VHS-Norm festgelegt, daß die Kopfumschaltung, d.h. die Abgabe eines Impulses bei Wiedergabe 6,5 Zeilen vor Eintreffen eines aus der aufgezeichneten FM wiedergewonnenen Vertikalsynchronimpulses mit einer Toleranz von ± 1,5 Zeilen erfolgen muß. Für die Ermittlung der Fehleinstellung des nicht einstellbaren Impulsgebers 1 werden z.B. die aus der FM des abgespielten Bezugsbandes wiedergewonnenen Vertikalsynchronimpulse mit den aus dem Impulsgeber 1 gelieferten Signalen am Ausgang A eines Phasenstellgliedes 5 in ihrer Phasenlage zueinander auf einem Bildschirm verglichen. Während des Einstellvorgangs wird im Rampengenerator 3 ein sich in seiner Größe zwischen zwei Extremwerten änderndes, vom Frequenzumsetzer 6 gesteuertes Signal erzeugt, welches über Speicher 4 dem Phasenstellglied 5 zugeführt wird. Am Ausgang A von Phasenstellglied 5 erscheint in Abhängigkeit des im Rampengenerator 3 erzeugten Korrektursignals das sich zeitlich ändernde Signal aus Generator 1. Bei Übereinstimmung der Phasenlage des Signales am Ausgang A mit dem von der Norm vorgegebenen Wert wird Schalter S1 geöffnet. Der zuletzt von Rampengenerator 3 erzeugte Korrekturwert ist in Speicher 4 gespeichert und der Einstellvorgang für die Korrektur des Kopfumschaltzeitpunktes ist abgeschlossen. Alle durch Impulsgeber 1 generierten Signale werden jetzt mit Hilfe der im Speicher 4 abgelegten Korrektursignale in dem Phasenstellglied 5 zeitlich um den Fehlbetrag der mechanischen Voreinstellung verzögert ausgegeben. Speicherung und Verzögerung kann in analoger oder auch in digitaler Form erfolgen. Die verzögerten Signale aus dem Phasenstellglied 5 werden am Ausgang A für die Kopfumschaltung zur Verfügung gestellt. Außerdem dienen sie für die Erzeugung der Phasenfehlerspannung für die Servosteuerungen des Magnetbandantriebes bei Wiedergabe.

Die vorbeschriebene Einstellung wurde anhand eines Blockschaltbildes als Ausführungsbeispiel mit bekannten Bauelementen beschrieben. Es ist aber auch möglich, mit Hilfe eines Mikrocomputers oder Mikroprozessors die beschriebenen Abläufe in einer Einstellroutine zu realisieren und große Teile der Bauelemente in einem derartigen Computer oder Prozessor zu integrieren. Dabei ist es möglich, den Einstellvorgang mit Hilfe eines Ablaufgenerators noch weiter zu automatisieren, indem z.B. mehrere Meßvergleiche durch fortlaufende Messung mit einer Speicherung in fest vorgegebenen Schritten erfolgt.

**Patentansprüche**

1. Videorecorder mit einer von einem Magnetband teilweise umschlungenen, Magnetköpfe tragenden rotierenden Kopftrommel, mit einem durch die Rotation der Kopftrommel Signale erzeugenden Impulsgeber (1), bei dem durch mechanische Fehleinstellung des Impulsgebers (1) gegenüber den vom jeweiligen System vorgeschriebenen Werten bedingte zeitliche Signalabweichungen in einem Service-Einstell-Vorgang durch Korrektursignale von einem Generator (3) veränderbar sind, die in einem nicht flüchtigen Speicher (4) gespeichert und nach Beendigung des Einstellvorganges als zeitliche Korrektur den vom Impulsgeber (1) gelieferten Signalen hinzugefügt werden.

2. Videorecorder nach Anspruch 1, **dadurch gekennzeichnet**, daß der Generator (3) ein Rampengenerator ist.

3. Videorecorder nach Anspruch 1 oder 2, **dadurch gekennzeichnet**, daß der Servlce-Einstell-Vorgang bei Wiedergabe eines Bezugsbandes erfolgt.

4. Videorecorder nach einem der Ansprüche 1 - 3, **dadurch gekennzeichnet**, daß der Service-Einstellvorgang in einem Mikroprozessor oder Mikrocomputer durchgeführt wird.

5. Videorecorder nach Anspruch 4, **dadurch gekennzeichnet**, daß der Mikroprozessor oder Mikrocomputer auch in den Servo- und Ablaufsteuerungen eingesetzt ist.

6. Videorecorder nach einem der Ansprüche 4 und 5, **dadurch gekennzeichnet**, daß der Mikroprozessor oder Mikrocomputer in den Service-Einstell-Vorgang durch einen Puls oder ein statisch wirkendes Signal in eine Einstellroutine gebracht wird.

7. Videorecorder nach einem der Ansprüche 1 - 6, **dadurch gekennzeichnet**, daß der Impulsgeber (1) keine mechanische Justiermöglichkeit aufweist.

8. Videorecorder nach einem der Ansprüche 1 - 7, **dadurch gekennzeichnet**, daß der Rampengenerator (3) von Signalen gesteuert wird, die von einem Frequenzumsetzer (6) aus den Signalen vom Impulsgeber (1) abgeleitet werden.

9. Videorecorder nach einem der Ansprüche 1 - 8, **dadurch gekennzeichnet**, daß der Rampenverlauf stufenförmig ist, oder kontinuierlich oder dreieckförmig ansteigend und abfallend ist und nach Erreichen eines Maximalwertes auf seineu Minimalwert zurückfällt.

10. Videorecorder nach einem der Ansprüche 1 - 10, **dadurch gekennzeichnet**, daß während einer Vollumdrehung der Kopftrommel der Rampenverlauf nicht geändert wird.

## Claims

1. Video recorder with a rotating head drum partly wrapped around with a magnetic tape and bearing magnetic heads, with a pulse generator (1) generating signals due to the rotation of the head drum, in which signal differences in time caused by wrong mechanical setting of the pulse generator (1) compared with the values prescribed by the particular system are modifiable in a service setting operation by correction signals from a generator (3), which are stored in a non-volatile storage means (4) and after completion of the setting operation added as a time correction to the signals supplied by the pulse generator (1).

2. Video recorder according to claim 1, **characterised in that** the generator (3) is a ramp generator.

3. Video recorder according to claim 1 or 2, **characterised in that** the service setting operation takes place during reproduction of a reference magnetic tape.

4. Video recorder according to any one of claims 1 to 3, **characterised in that** the service setting operation is carried out in a microprocessor or microcomputer.

5. Video recorder according to claim 4, **characterised in that** the microprocessor or microcomputer is also used in the servo and sequence controls.

6. Video recorder according to any one of claims 4 and 5, **characterised in that** the microprocessor or microcomputer is brought into the service setting operation by a pulse or a statically acting signal into a setting routine.

7. Video recorder according to any one of claims 1 to 6, **characterised in that** the pulse generator (1) has no possibility of mechanical adjustment.

8. Video recorder according to any one of claims 1 - 7, **characterised in that** the ramp generator (3) is controlled by signals which are derived by a frequency convertor (6) from the signals from the pulse generator (1).

9. Video recorder according to any one of claims 1 to 8, **characterised in that** the ramp curve is step-shaped, or is rising and falling continuously or triangular-shaped, and drops back to its minimum value after attainment of a maximum value.

10. Video recorder according to any one of claims 1 - 10, **characterised in that** during a complete rotation of the head drum the ramp curve is not modified.

## Revendications

1. Magnétoscope avec un tambour des têtes rotatif, qui porte des têtes magnétiques et qui est partiellement entouré par une bande magnétique, avec un générateur d'impulsions (1) qui produit des signaux à cause de la rotation du tambour des têtes, dans lequel des déviations de signal dans le temps, qui sont déterminées par un mauvais réglage mécanique du générateur d'impulsions (1) par rapport aux valeurs prédéfinies par le système respectif, peuvent être modifiées dans une opération de réglage de service par des signaux de correction provenant d'un générateur (3) qui sont mémorisés dans une mémoire (4) non volatile et qui sont ajoutés comme correction dans le temps aux signaux émis par le générateur d'impulsions (1) après achèvement de l'opération de réglage.

2. Magnétoscope selon la revendication 1, **caractérisé en ce** que le générateur (3) est un générateur de rampe.

3. Magnétoscope selon la revendication 1 ou 2, **caractérisé en ce** que l'opération de réglage de service est effectuée à la lecture d'une bande de référence.

4. Magnétoscope selon l'une des revendications 1 à 3, **caractérisé en ce** que l'opération de réglage de service est effectuée dans un microprocessseur ou un micro-ordinateur.

5. Magnétoscope selon la revendication 4, **caractérisé en ce** que le microprocesseur ou le micro-ordinateur est également utilisé dans les servocommandes et les commandes de déroulement.

6. Magnétoscope selon l'une des revendications 4 et 5, **caractérisé en ce** que le microprocesseur ou le microordinateur est mis en opération de réglage de service par une impulsion ou un signal à effet statique dans une routine de réglage.

7. Magnétoscope selon l'une des revendications 1 à 6, **caractérisé en ce** que le générateur d'impulsions (1) ne présente pas de possibilité mécanique d'ajustage.

8. Magnétoscope selon l'une des revendications 1 à 7, **caractérisé en ce** que le générateur de rampe (3) est commandés par des signaux qui sont dérivés par un convertisseur de fréquence (6) des signaux du générateur d'impulsions (1).

9. Magnétoscope selon l'une des revendications 1 à 8, **caractérisé en ce** que l'allure de la rampe est en échelons ou continue ou croissante et décroissante en triangle et retombe à sa valeur minimale après avoir atteint une valeur maximale.

10. Magnétoscope selon l'une des revendications 1 à 10, **caractérisé en ce** que l'allure de la rampe n'est pas modifiée pendant une rotation complète du tambour des têtes.